# EUROPEAN PATENT SPECIFICATION

(11) **EP 4 289 611 B1**
(45) Date of publication and mention of the grant of the patent: **23.04.2025**
(21) Application number: 22749423.4
(22) Date of filing: 12.01.2022
(51) Int. Cl.: B29K 23/00, B29K 105/04, B29L 7/00, C08J 9/28, B29C 67/20, B29C 48/305, B29C 48/88, B29C 48/00, B29C 48/08, B29K 105/00

(54) **METHOD FOR MANUFACTURING MICROPOROUS POLYOLEFIN RESIN SHEET AND DEVICE FOR MANUFACTURING MICROPOROUS POLYOLEFIN RESIN SHEET**
VERFAHREN ZUR HERSTELLUNG EINER MIKROPORÖSEN POLYOLEFINHARZFOLIE UND VORRICHTUNG ZUR HERSTELLUNG EINER MIKROPORÖSEN POLYOLEFINHARZFOLIE
PROCÉDÉ ET DISPOSITIF DE FABRICATION DE FEUILLE DE RÉSINE DE POLYOLÉFINE MICROPOREUSE

(30) Priority: 08.02.2021 JP 2021017942
(43) Date of publication of application: 13.12.2023
(73) Proprietor: Toray Industries, Inc., Tokyo 103-8666 (JP)
(72) Inventor: YOSHIKAWA, Toshiki, Otsu-shi, Shiga 520-8558 (JP); INOMOTO, Takeshi, Otsu-shi, Shiga 520-8558 (JP)
(74) Representative: Hoefer & Partner Patentanwälte mbB
(86) International application number: PCT/JP2022/000740
(87) International publication number: WO 2022/168546

(56) References cited:
- WO-A1-2016/125526
- WO-A1-2016/125527
- WO-A1-2016/125528
- JP-A- 2020 037 235
- JP-A- 2021 017 058
- JP-A- H10 180 847

## Description

### Field

The present invention relates to a method for producing a microporous polyolefin resin sheet and an apparatus for producing a microporous polyolefin resin sheet. Background

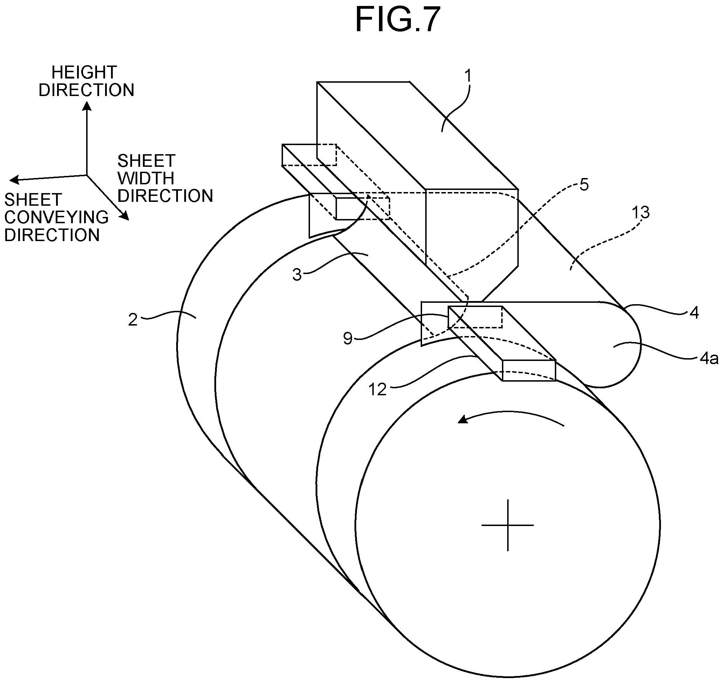

The following first describes a general method for producing a microporous polyolefin resin sheet. FIG. 7 is a schematic diagram of a general apparatus for producing a microporous polyolefin resin sheet. This production apparatus illustrated in FIG. 7 includes a die 1 having a discharge port 5 for discharging a sheet material 3 containing a polyolefin resin and a diluent, a casting device 2 cooling and solidifying the sheet material 3 discharged from the discharge port 5 while conveying the sheet material 3, and a decompression chamber 4 disposed upstream of the discharge port 5 in a sheet conveying direction, covering a space 13 between the sheet material 3 and the casting device 2, and sucking air to form a decompression space. A method for producing a sheet is known in which the sheet material 3 is discharged from the discharge port 5 of the die 1 toward the casting device 2, air in the space 13 is sucked from openings 9 of exhaust nozzles 12 disposed outside both ends of the sheet material 3 in a sheet width direction to bring the sheet material 3 into intimate contact with the casting device 2, and the casting device 2 cools and solidifies the sheet material 3 while conveying the sheet material 3. In general, a small gap is formed between a side wall 4a of the decompression chamber 4 covering a face of the space 13 perpendicular to the sheet width direction and the casting device 2 in order to prevent contact between the casting device 2 and the decompression chamber 4 while reducing an inflow of outside air.

By the way, as a technique to improve sheet quality, there is an apparatus for producing a resin sheet disclosed in Patent Literature 1. Patent Literature 1 discloses an apparatus for producing a resin sheet including shielding plates near the ends of the sheet material for the purpose of reducing thickness unevenness caused by vibration of the sheet material. FIG. 8 is a schematic diagram of the apparatus for producing a resin sheet of Patent Literature 1 observed from the top in the vertical direction. As illustrated in FIG. 8, in the production apparatus of Patent Literature 1, the rectifying effect by shielding plates 6 can reduce the formation of vortexes at the ends of the sheet material 3, reduce vibration of the sheet material, and reduce thickness unevenness of the resin sheet.

### Citation List

### Patent Literature

Patent Literature 1: Japanese Patent Application Laid-open No. H10-180847

### Summary

### Technical Problem

With an increase in the volume of production of resin sheets in recent years, there is a strong demand to increase the discharge amount of the sheet material and to extend a continuous film forming time. However, increasing the discharge amount of the sheet material and extending the continuous film forming time also increase the opportunity for low molecular weight components, diluents, and additive-derived gases in the sheet material to adhere near the discharge port of the die and liquefy (hereafter, droplets). When these droplets come into intimate contact with the casting device and the sheet material due to an airflow flowing in the decompression chamber, they cause sheet defects and sheet tears.

However, at present, no method has been developed to reduce the scattering of droplets.

Given these circumstances, the present invention provides a method and an apparatus for producing a microporous polyolefin resin sheet that can stably produce a high-quality sheet by reducing the scattering of droplets to the casting device and the sheet material due to the airflow generated in the decompression chamber.

### Solution to Problem

Provided is a method for producing a microporous polyolefin resin sheet according to the present invention to solve the object. The method includes: discharging a sheet material containing a polyolefin resin and a diluent from a discharge port of a die toward a casting device; covering a space between the sheet material and the casting device by a decompression chamber disposed upstream of the discharge port in a sheet conveying direction; sucking air in the decompression chamber to make a decompression space and bringing the sheet material into intimate contact with the casting device; and cooling and solidifying the sheet material while conveying the sheet material by the casting device, the suction of air in the decompression chamber being performed from exhaust nozzles disposed outside both ends of the sheet material in a width direction such that openings of the exhaust nozzles face each other, Y1/H ≤ 0.13 and 0.25 ≤ Y2/H ≤ 0.75 when a shortest distance from the discharge port of the die to an outer peripheral face of the casting device is H, a shortest distance from an upper end of the opening to an end of the sheet material is Y1, and a shortest distance from a lower end of the opening to the end of the sheet material is Y2.

In the method for producing a microporous polyolefin resin sheet according to the present invention, it is desirable that a suction width L1, which is a horizontal distance from an end of the sheet material 3 to an upstream end in the sheet conveying direction at the upper end of the opening of the exhaust nozzle observed from outside in a sheet width direction is set to be L1/H ≤ 0.38.

In the method for producing a microporous polyolefin resin sheet according to the present invention, it is desirable that a seal gap, which is a gap positioned immediately below the opening of the exhaust nozzle in a gap between a side wall of the decompression chamber and the casting device, is physically blocked by a seal material, the side wall being perpendicular to a sheet width direction.

In the method for producing a microporous polyolefin resin sheet according to the present invention, it is desirable that the seal material is an elastic body, and the seal material is pressed against the casting device to block the seal gap.

In the method for producing a microporous polyolefin resin sheet according to the present invention, it is desirable that the seal material is pressed against and fixed to the decompression chamber by a pressing member.

Provided is an apparatus for producing a microporous polyolefin resin sheet according to the present invention to solve the object. The apparatus includes: a die including a discharge port discharging a sheet material containing a polyolefin resin and a diluent; a casting device configured to cool and solidify the sheet material discharged from the discharge port while conveying the sheet material; and a decompression chamber disposed upstream of the discharge port in a sheet conveying direction, the decompression chamber being configured to cover a space between the sheet material and the casting device, and suck air to make a decompression space, in the decompression chamber, exhaust nozzles configured to suck air in the decompression chamber being disposed outside both ends of the sheet material in a width direction such that openings of the exhaust nozzles face each other, the die, the casting device, and the exhaust nozzles being disposed such that Y1/H ≤ 0.13 and 0.25 ≤ Y2/H ≤ 0.75 when a shortest distance from the discharge port of the die to an outer peripheral face of the casting device is H, a shortest distance from an upper end of the opening of the exhaust nozzle to an end of the sheet material is Y1, and a shortest distance from a lower end of the opening of the exhaust nozzle to the end of the sheet material is Y2.

In the apparatus for producing a microporous polyolefin resin sheet according to the present invention, it is desirable that the exhaust nozzle is disposed such that a suction width L1, which is a horizontal distance from an end of the sheet material 3 to an upstream end in the sheet conveying direction at the upper end of the opening of the exhaust nozzle observed from outside in a sheet width direction, gives L1/H ≤ 0.38.

It is desirable that the apparatus for producing a microporous polyolefin resin sheet according to the present invention further includes a seal material configured to physically block a seal gap, which is a gap positioned immediately below the opening of the exhaust nozzle in a gap between a side wall of the decompression chamber and the casting device, the side wall being perpendicular to a sheet width direction.

In the apparatus for producing a microporous polyolefin resin sheet according to the present invention, it is desirable that the seal material is an elastic body, and the seal material is pressed against the casting device.

It is desirable that the apparatus for producing a microporous polyolefin resin sheet according to the present invention further includes a pressing member configured to press the seal material against and fix the seal material to the decompression chamber.

### Advantageous Effects of Invention

The method for producing and the apparatus for producing a polyolefin resin sheet of the present invention reduce the scattering of droplets due to the airflow in the decompression chamber to the casting device and the sheet material and can thereby stably produce a high-quality sheet.

### Brief Description of Drawings

FIG. 1 is a schematic diagram of an aspect of an apparatus for producing a microporous polyolefin resin sheet of the present invention observed from downstream of a sheet conveying direction.
FIG. 2 is a partially enlarged sectional view perpendicular to the vertical direction along the X-X line in FIG. 1.
FIG. 3 is a diagram of a state in which Y1/H has been increased from the state in FIG. 2.
FIG. 4 is a schematic diagram of an aspect of the apparatus for producing a microporous polyolefin resin sheet of the present invention observed from a sheet width direction.
FIG. 5A is a diagram illustrating a seal material and a pressing member disposed between a casting device and a decompression chamber of the apparatus for producing a microporous polyolefin resin sheet in FIG. 1.
FIG. 5B is a sectional view in the vertical direction along the Y-Y line in FIG. 5A.
FIG. 5C is a sectional view in the vertical direction along the Z-Z line in FIG. 5A.
FIG. 6 is a graph of a shortest distance from an opening to an end of a sheet material in examples and comparative examples.
FIG. 7 is a schematic diagram of a general apparatus for producing a microporous polyolefin resin sheet.

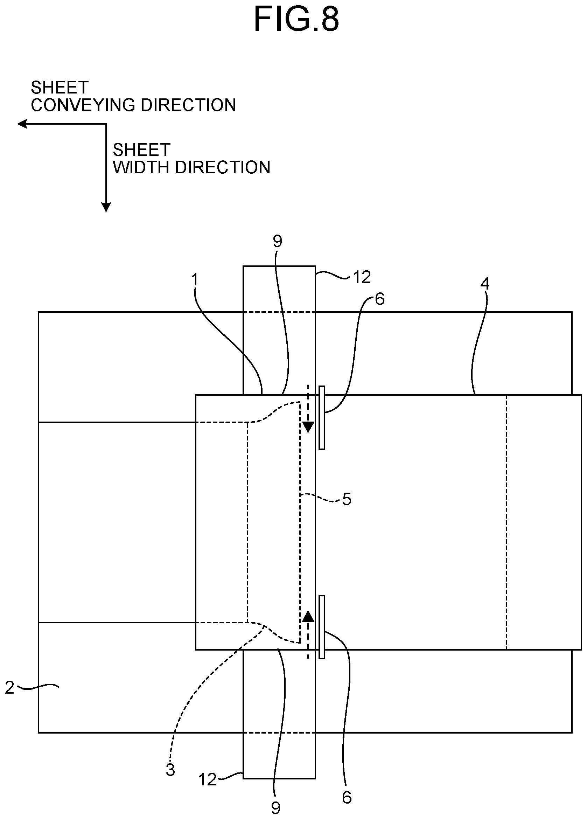

FIG. 8 is a schematic diagram of an apparatus for producing a resin sheet of Patent Literature 1 observed from the top in the vertical direction.

### Description of Embodiments

### [Descriptions of Terms]

The following describes the meanings of respective terms in the present invention.

The "sheet material" is a material forming a sheet. As the sheet material, a resin of a polyolefin solution prepared by mixing a polyolefin resin such as polyethylene, polypropylene, polystyrene, or polymethylpentene with a diluent and heating and melting the mixture can be used, for example. The diluent is not limited to a particular diluent so long as it is a substance that can be mixed with or dissolved in the polyolefin resin. Materials that are miscible with the polyolefin in a melt-kneaded state but solid at room temperature may be used as the diluent. Examples of such a solid diluent include stearyl alcohol, ceryl alcohol, and paraffin waxes. The diluent is preferably liquid at room temperature in order to prevent stretching instability and in consideration of later application. Examples of the liquid diluent include aliphatic, cyclic aliphatic, or aromatic hydrocarbons such as nonane, decane, decalin, paraxylene, undecane, dodecane, and liquid paraffin, mineral oil fractions with boiling points corresponding thereto, and phthalates that are liquid at room temperature such as dibutyl phthalate and dioctyl phthalate. Liquid paraffin is further preferably used in order to obtain a stable gel-like sheet. In addition, the viscosity of the liquid diluent is preferably 20 to 200 cSt at 40°C. The ratio between the polyolefin resin and the diluent blended is preferably 10 to 50% by mass of the polyolefin resin and 50 to 90% by mass of the diluent with the total of the polyolefin resin and the diluent being 100% by mass from the viewpoint of making the moldability of an extrudate favorable. The uniform melt-kneading step for the sheet material is not limited to particular means, and examples include calenders, various mixers, and extruders with screws.

The "casting device" refers to a device bringing the sheet material discharged from a discharge port of a die to therewith to convey the sheet material downstream while cooling and solidifying the sheet material. The form is not limited to a particular form, and examples include rolls and belts.

The "width direction" refers to a direction matching a width direction when the sheet material is formed into a sheet shape by the die.

The "sheet conveying direction" refers to a direction in which the casting device conveys the sheet. The destination of conveyance is downstream, whereas the opposite is upstream.

The "decompression space" is a space formed between the sheet material and the casting device, the space being covered by a decompression chamber to have negative pressure.

The "decompression chamber" refers to a device covering and decompressing the space between the sheet material and the casting device to bring the sheet material into intimate contact with the casting device. In general, the pressure in the decompression chamber is -1,500 Pa or higher and -50 Pa or lower with respect to atmospheric pressure. The pressure in the decompression chamber may be controlled in accordance with film forming conditions.

The "opening" is a portion of an exhaust nozzle sucking air from inside the decompression chamber. The shape of the opening is not limited to a particular shape, and examples include a square, a rectangle, a trapezoid, a circle, and an oval. The opening may be subjected to surface treatment such as nickel plating, chromium plating, or zinc plating. The power source for suction is not limited to a particular power source, and examples include blowers and vacuum pumps.

The "side wall" refers to a side face of the decompression chamber, the side face being perpendicular to the sheet width direction.

The following describes an apparatus for producing and a method for producing a polyolefin resin sheet of the present invention in detail with reference to the accompanying drawings. However, the present invention is not limited to the embodiments shown here. Components having the same uses and functions as those of the conventional technique may have the same symbols as those thereof.

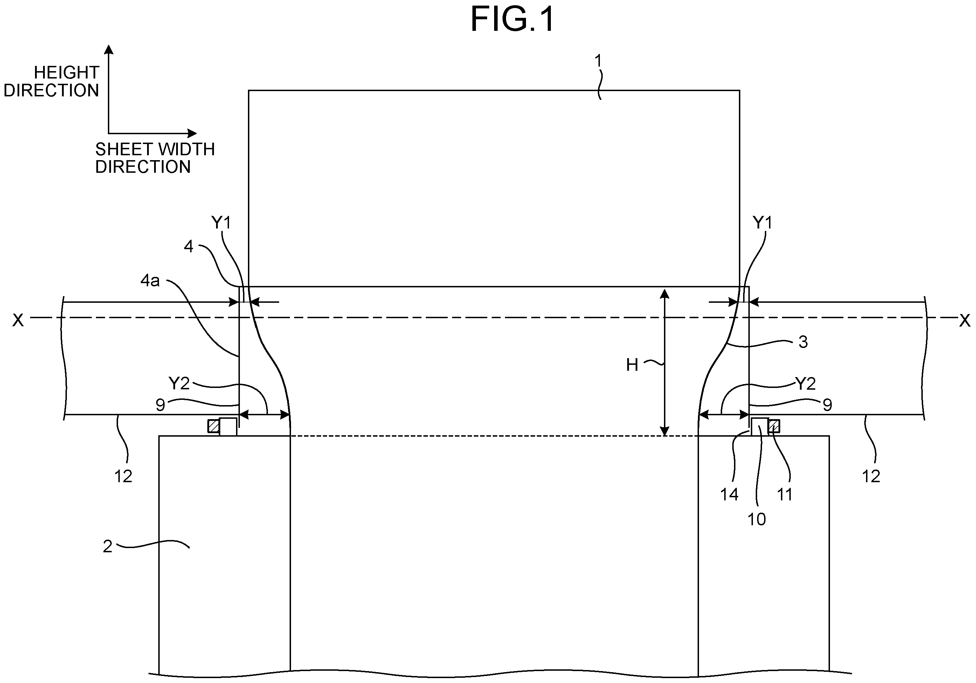

Referring to FIG. 1, the following describes the influence of each dimension of an opening 9 of an exhaust nozzle 12 included in a decompression chamber 4 on an airflow in the decompression chamber 4. FIG. 1 is a schematic diagram of an aspect of the apparatus for producing a polyolefin resin sheet of the present invention observed from upstream of the sheet conveying direction. The symbols Y1 and Y2 in the drawing are shortest distances from the opening 9 to an end of the sheet material 3, in which the shortest distance at an upper end of the opening 9 is Y1 and the shortest distance at a lower end of the opening 9 is Y2. The symbol H is a shortest distance from a discharge port 5 of a die 1 to an outer peripheral face of a casting device 2. The length of H is determined by the film forming conditions, but if the opening 9 is small, suction is made unstable due to clogging of droplets and the like, and thus from the viewpoint of ensuring the height of the opening 9 from the upper end to the lower end, H is preferably 10 mm or more and more preferably 30 mm or more. The inventors of the present invention have conducted earnest studies to find that Y1/H and Y2/H, in which Y1 and Y2 are standardized by H, affect the airflow in the decompression chamber 4, which by extension scatters droplets in the decompression chamber 4.

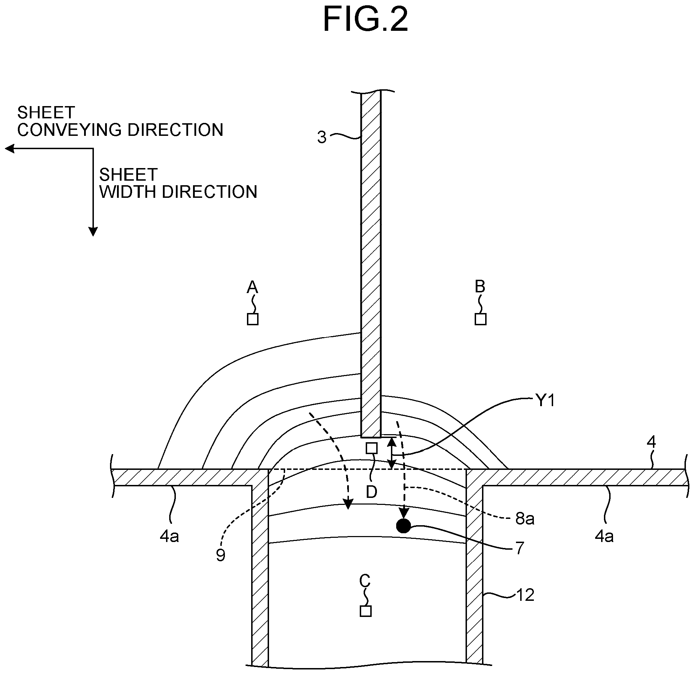

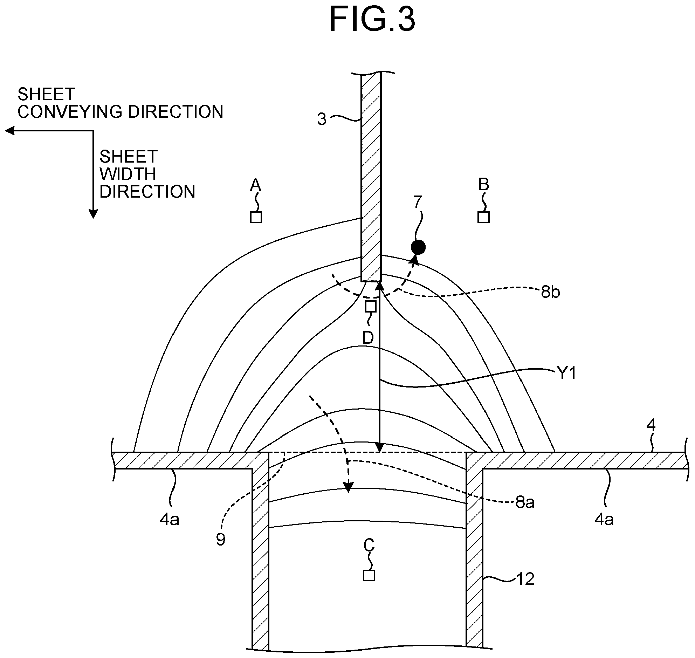

Referring to FIGS. 2 and 3, the following describes pressure and airflows near the end of the sheet material 3. FIG. 2 is a partially enlarged sectional view perpendicular to the vertical direction along the X-X line in FIG. 1, the diagram illustrating the pressure near the end of the sheet material 3 with contour lines. FIG. 3 is a diagram illustrating the pressure near the end of the sheet material 3 with contour lines when the distance of Y1 is longer than that in the state in FIG. 2 (when H is the same, and Y1/H is larger). The following gives the pressure as specific numerical values in order to accurately convey the main point of the present invention, but the numerical values are only by way of example and do not limit the scope of the present invention.

First, in the state in FIG. 2, it is assumed that the pressure at each place is atmospheric pressure near the end of the sheet material 3 downstream of the sheet conveying direction (a point A), (atmospheric pressure - 300) Pa near the end of the sheet material 3 inside the decompression chamber 4 (a point B), (atmospheric pressure - 600) Pa downstream of the opening 9 (a point C), and (atmospheric pressure - 400) Pa near the end of the sheet material 3 closer to the exhaust nozzle 12 (a point D). In this case, the pressure contour lines are as illustrated in FIG. 2, and air is characterized to flow from higher pressure to lower pressure due to the Navier-Stokes equation, and thus most of air flows to the point C, which is lower in pressure than the point A, that is, to the opening 9 of the exhaust nozzle 12 as in the air flow 8a.

As the distance of Y1 becomes longer and Y1/H increases from the state in FIG. 2, the pressure gradient from the point A to the point C becomes gentler, and the pressure at the point D becomes higher up to (atmospheric pressure - 200) Pa than that in the state in FIG. 2. Then, the pressure distribution becomes as in FIG. 3, and part of air flows from the point A through the point D to the point B, which is lower in pressure, that is, also into the decompression chamber 4 as in the airflow 8b. This airflow 8b scatters the droplets 7 near the discharge port 5 of the die 1 into the body of the decompression chamber 4, which adhere to the casting device 2 and sheet material 3, causing sheet defects and sheet tears.

If the shortest distance Y2 from the lower end of the opening 9 to the end of the sheet material 3 is shorter, or if the shortest distance H from the discharge port 5 of the die 1 to the outer peripheral face of the casting device 2 is longer, and Y2/H is too small, the airtightness in the decompression chamber 4 increases, the pressure inside the decompression chamber 4 becomes lower than that near the end of the sheet material 3 closer to the exhaust nozzle 12, and, as in the case of FIG. 3, the airflow 8b, which flows from downstream of the sheet conveying direction through the end of the sheet material 3 to the inside of the decompression chamber 4, is generated in the decompression chamber 4.

On the other hand, if the shortest distance Y2 from the lower end of the opening 9 to the end of the sheet material 3 is longer, or if the shortest distance H from the discharge port 5 of the die 1 to the outer peripheral face of the casting device 2 is shorter, and Y2/H is too large, vortexes occur near the end of the sheet material 3, and turbulent pressure and airflows scatter the droplets 7.

The inventors of the present invention have further conducted experiments and theoretical calculations to find that by setting Y1/H ≤ 0.13 and 0.25 ≤ Y2/H ≤ 0.75, the pressure at the point B is stably higher than that at the point D as illustrated in FIG. 2, and it is possible to eliminate the airflow flowing into the decompression chamber 4, prevent the scattering of the droplets 7 into the body of the decompression chamber 4, and reduce the adherence of the droplets 7 to the casting device 2 and the sheet material 3. More preferably, Y1/H ≤ 0.05.

To achieve Y1/H ≤ 0.13 and 0.25 ≤ Y2/H ≤ 0.75, the decompression chamber 4 may be designed in consideration of the discharge amount of the sheet material 3 from the die 1, the shortest distance H from the discharge port 5 of the die 1 to the outer peripheral face of the casting device 2, a suction amount from the exhaust nozzle 12, and the like, but it is preferable to make side walls 4a of the decompression chamber 4 movable in the width direction of the sheet material 3 to adjust Y1 and Y2, the side walls 4a being perpendicular to the sheet width direction.

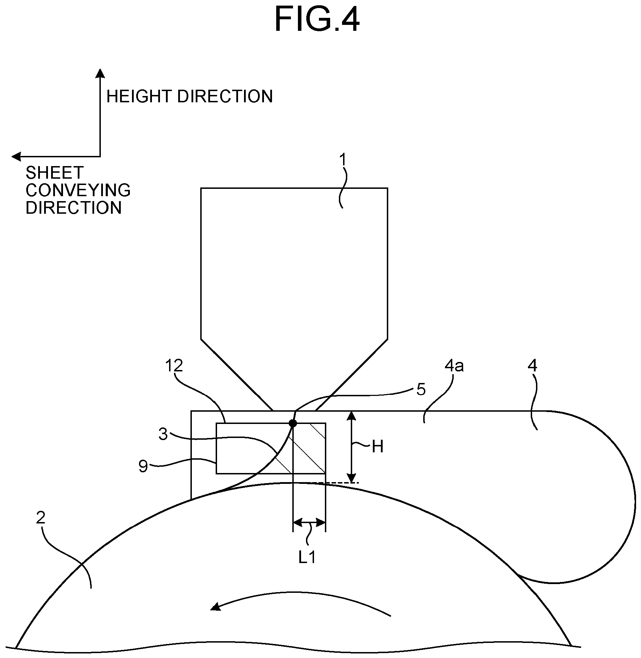

Refer now to FIG. 4. FIG. 4 is a schematic diagram of an aspect of the apparatus for producing a polyolefin resin sheet of the present invention observed from the sheet width direction. In reality, the sheet material 3 is blocked by the decompression chamber 4 and cannot be seen, but FIG. 4 illustrates the sheet material 3 with the assumption that it can be observed through the decompression chamber 4 for the purpose of understanding the present invention. A suction width L1 in the drawing is a horizontal distance from the end of the sheet material 3 to an upstream end in the sheet conveying direction at the upper end of the opening 9 of the exhaust nozzle 12 observed from outside in the sheet width direction. In the method for producing a polyolefin resin sheet of the present invention, it is preferable to set L1/H ≤ 0.38. Even if L1/H is larger than 0.38, the effect of the present invention can be obtained by setting Y1, Y2, and H to be in the above ranges, but by setting L1/H to 0.38 or less, the amount of air sucked from inside the body of the decompression chamber 4 reduces, further, the pressure inside the decompression chamber 4 can be increased, and the airflow from downstream of the sheet conveying direction through the end of the sheet material 3 to the inside of the decompression chamber 4 can be reduced. In the apparatus for producing a microporous polyolefin resin sheet of the present invention illustrated in FIG. 1 and FIG. 4, only the exhaust nozzles 12 make the space 13 in the body of the decompression chamber 4 a decompressed space without performing decompression from the body of the decompression chamber 4 by a vacuum pump or the like, but the inside of the body of the decompression chamber 4 may also be decompressed by a vacuum pump. For adjustment of Y1 and Y2, it is preferable to decompress the inside of the body of the decompression chamber 4 only by the exhaust nozzles 12 without decompressing it by a vacuum pump or the like.

Refer again to FIG. 1. A seal gap 14 in the drawing is a gap positioned immediately below the opening 9 of the exhaust nozzle 12 in a gap between the side wall 4a of the decompression chamber 4 and the casting device 2, the side wall 4a being perpendicular to the sheet width direction. As illustrated in FIG. 1, in the method for producing a polyolefin resin sheet of the present invention, the seal gap 14 is preferably blocked by a seal material 10. Although the effect of the present invention can be obtained even without this seal material 10, providing the seal material 10 can eliminate an airflow flowing in through the seal gap 14 to disrupt the pressure balance near the end of the sheet material 3 and reduce the scattering of the droplets 7 into the decompression chamber. The material of the seal material 10 is not limited to a particular material, and examples include resin, rubber, and ceramic.

Further, in the method for producing a polyolefin resin sheet of the present invention, the seal material 10 is preferably an elastic body, and the seal gap 14 is preferably blocked by pressing the seal material 10 against the casting device 2. By pressing the seal material 10 as an elastic body against the casting device 2, due to its compressive load, the seal material 10, while becoming deformed, can also prevent a minute gap with respect to the casting device 2. More preferably, the seal material 10 is a non-conductive, porous resin or rubber that does not impart conductivity to a product even if wear particles are mixed into the product. The hardness of the seal material 10 is preferably Shore E10 to 35, which can impart sealability at low loads. More preferably, the hardness is Shore E25 to 35, with which distortion due to friction with the casting device 2 is small.

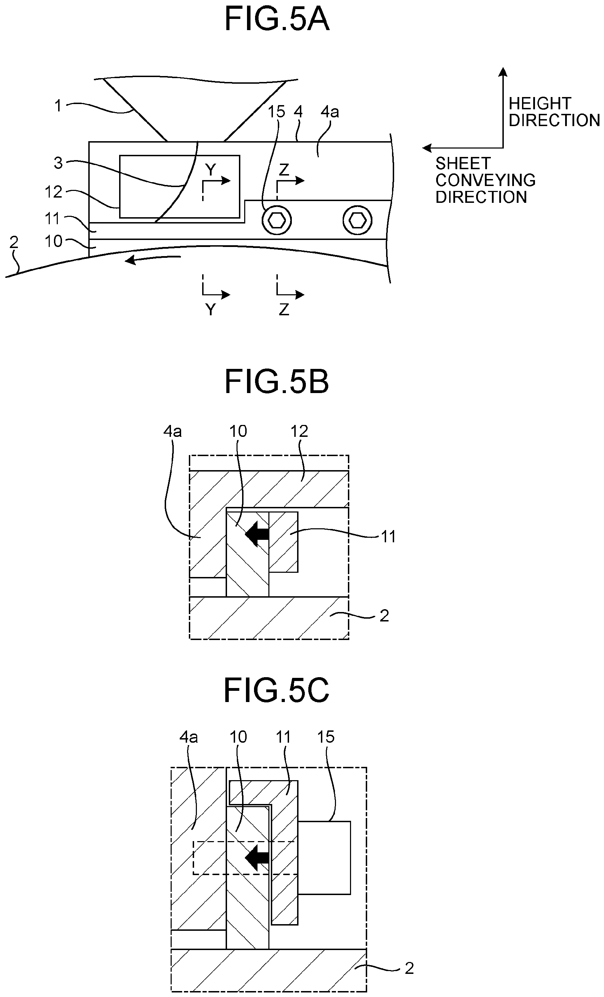

The method for fixing the seal material 10 is not limited to a particular method, and examples include a method of fastening it directly to the side wall 4a with a plurality of bolts. However, the seal material 10 pressed against the casting device 2 may become distorted or misaligned due to friction with the casting device 2 and fail to exhibit its sealing function, and thus care must be taken in the method of fixing. If the seal material 10 is directly bolted, the fixation may be lax in a narrow gap between the exhaust nozzle 12 and the casting device 2 and the like, and the seal material 10 may become distorted or misaligned. Thus, in the method for producing a polyolefin resin sheet of the present invention, the seal material 10 is preferably pressed against and fixed to the decompression chamber 4 by a pressing member 11. FIG. 5A to FIG. 5C are diagrams illustrating the seal material 10 and the pressing member 11 disposed between the casting device 2 and the decompression chamber 4 of the apparatus for producing a microporous polyolefin resin sheet in FIG. 1. As illustrated in FIG. 5A to FIG. 5C, the seal material 10 is preferably fixed with bolts 15 via the pressing member 11. Even in the narrow gap between the exhaust nozzle 12 and the casting device 2, in which the bolt 15 cannot be disposed, like that illustrated in FIG. 5B, the seal material 10 is fixed through the entire face being in contact with the pressing member 11, and thus distortion and misalignment are reduced, and the seal gap 14 can be stably blocked by the seal material 10. The shape of the pressing member 11 is not limited to a particular shape, and it is preferably an L-shaped plate also covering the top of the seal material 10 like that illustrated in FIG. 5A and FIG. 5C, but it may be a flat plate. Further, the frictional force of the contact surface with respect to the seal material 10 of the pressing member 11 may be increased in order to prevent the seal material 10 from becoming misaligned. Examples include providing protruding parts, increasing surface roughness, and applying an adhesive.

### [Examples]

The following shows examples of polyolefin resin sheet production using the method for producing a polyolefin resin sheet of the present invention.

### [Example 1]

The following describes a result of actually producing a polyolefin resin sheet using the method for producing a polyolefin resin sheet and evaluating defects caused by droplet scattering. Specific sheet production conditions and a specific method for evaluating defects in the present embodiment are as follows.

### (1) Sheet material

High-density polyethylene (HDPE): Viscosity 1,000 Pa·s. The viscosity was measured by the method of JIS K7117-2 under the conditions at a shear rate of 100/s and a temperature of 200°C.
Liquid paraffin (LP): Kinematic viscosity 50 cSt (at 40°C). The mixing ratio between HDPE and LP is HDPE:LP = 30:70 by mass.

### (2) Extrusion

An extruder was used to extrude the sheet material at a flow rate of 250 kg/h, which was passed through a gear pump and a filter and was then fed to a die. The apparatus temperature up to the die is 220°C.

### (3) Die

The sheet material was discharged from a 500 mm wide, 2 mm gap discharge port and was formed into a sheet shape. The amount of LP volatilized was measured from the discharged sheet to be about 100 g/h.

### (4) Casting device

The sheet was brought into intimate contact with a sheet forming roll rotating at a speed of 10 m/minute at a temperature of 35°C and was cooled and solidified. The discharge port of the die was installed at a position directly above the center of the sheet forming roll, with the shortest distance H from the discharge port of the die to the outer peripheral face of the sheet forming roll being 40 mm.

### (5) Decompression chamber

The decompression chamber is installed upstream of the discharge port of the die in the conveying direction and is shaped to cover the space between the sheet material discharged from the discharge port and the casting device. The wall faces at both ends of the decompression chamber are disposed with exhaust nozzles facing each other, and the opening of the exhaust nozzle is rectangular with the horizontal direction as the long side, with the long side being 70 mm and the short side being 32 mm. With the die installed under the conditions for film forming, the distance from the discharge port of the die to the upper end of the opening was 3 mm and the distance from the lower end of the opening to the sheet forming roll was 5 mm. In this state, the inside of the decompression chamber was evacuated at -600 Pa from atmospheric pressure by a blower connected to the openings. The decompression chamber includes a mechanism to adjust the positions of the wall faces at both ends and was adjusted such that with the sheet material being discharged from the discharge port of the die, Y1 was 4 mm (Y1/H = 0.1), Y2 was 20 mm (Y2/H = 0.5), and L1 was 16 mm (L1/H = 0.4). The decompression chamber was disposed such that the seal gap was 1 mm.

### (6) Defect detection device

An inspection device MaxEye.Impact (Futech Inc.) was used to count the number of defects due to droplet scattering on the sheet (423 mm wide and 100 m long) collected under the above conditions. The number of defects was five.

### [Examples 2 to 6 and Comparative Examples 1 to 5]

Sheets were collected and inspected for the number of defects in the same manner as in Example 1 except that the respective dimensions were changed as listed in Table 1.

### [Example 7]

A sheet was collected and inspected for the number of defects in the same manner as in Example 1 except that a seal material (polytetrafluoroethylene, hardness Shore D55) was fixed to the decompression chamber with bolts to physically block the seal gap.

### [Example 8]

A sheet was collected and inspected for the number of defects in the same manner as in Example 7 except that the seal material was silicone sponge rubber as an elastic body (hardness Shore E30), and the seal material was pressed against the casting device and fixed to the decompression chamber with bolts to block the seal gap.

### [Example 9]

A sheet was collected and inspected for the number of defects in the same manner as in Example 8 except that the seal material was pressed against and fixed to the decompression chamber by a pressing member (SUS304, a 2 mm thick flat plate).

Tables 1 and 2 summarize the production conditions and the number of defects having occurred in the sheets for Examples 1 to 6 and Comparative Examples 1 to 5, respectively.

**Table 1**

| | Example 1 | Example 2 | Example 3 | Example 4 | Example 5 | Example 6 |
|---|---|---|---|---|---|---|
| Y1 [mm] | 4 | 2 | 4 | 4 | 6 | 4 |
| Y2 [mm] | 20 | 20 | 12 | 28 | 30 | 20 |
| L1 [mm] | 16 | 16 | 16 | 16 | 24 | 14 |
| H [mm] | 40 | 40 | 40 | 40 | 60 | 40 |
| Y1/H | 0.10 | 0.05 | 0.10 | 0.10 | 0.10 | 0.10 |
| Y2/H | 0.50 | 0.50 | 0.30 | 0.70 | 0.50 | 0.50 |
| L1/H | 0.40 | 0.40 | 0.40 | 0.40 | 0.40 | 0.35 |
| Number of defects | 5 | 4 | 4 | 5 | 5 | 3 |

**Table 2**

| | Comparative Example 1 | Comparative Example 2 | Comparative Example 3 | Comparative Example 4 | Comparative Example 5 |
|---|---|---|---|---|---|
| Y1 [mm] | 6 | 4 | 4 | 6 | 6 |
| Y2 [mm] | 20 | 8 | 32 | 12 | 28 |
| L1 [mm] | 16 | 16 | 16 | 16 | 16 |
| H [mm] | 40 | 40 | 40 | 40 | 40 |
| Y1/H | 0.15 | 0.10 | 0.10 | 0.15 | 0.15 |
| Y2/H | 0.50 | 0.20 | 0.80 | 0.30 | 0.70 |
| L1/H | 0.40 | 0.40 | 0.40 | 0.40 | 0.40 |
| Number of defects | 12 | 10 | 13 | 11 | 13 |

### [Evaluation Result]

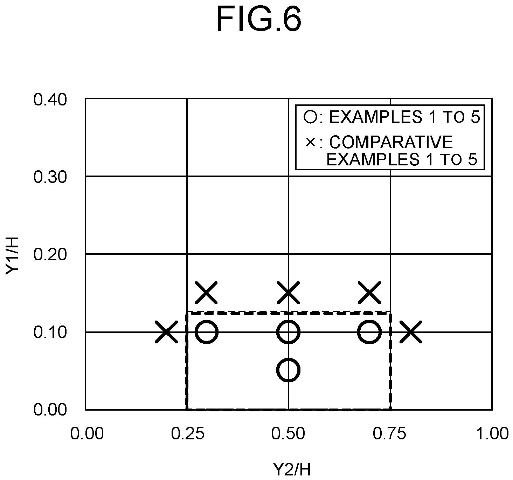

Referring to FIG. 6, the following describes the relation between Y1/H and Y2/H in each of the examples and the comparative examples. FIG. 6 is a graph showing the position of Y1/H and Y2/H for each of the examples and the comparative examples, with Y1/H on the vertical axis and Y2/H on the horizontal axis. "O" is Examples 1 to 5, "X" is Comparative Examples 1 to 5, and the area within the dotted line is a range satisfying the conditions "Y1/H ≤ 0.13" and "0.25 ≤ Y2/H ≤ 0.75." As illustrated in FIG. 6 and listed in Table 1, in Examples 1 to 5, which satisfied the conditions "Y1/H ≤ 0.13" and "0.25 ≤ Y2/H ≤ 0.75," the pressure in the decompression chamber was higher than that at the end of the sheet material, and the airflow flowing into the decompression chamber was reduced, and thus the number of defects was small, which was four and five.

On the other hand, as illustrated in FIG. 6 and listed in Table 2, in Comparative Examples 1 to 5, which did not satisfy the condition "Y1/H ≤ 0.13" or "0.25 ≤ Y2/H ≤ 0.75," the number of defects was large, which was 10 to 13.

Further, in Example 6, which satisfied the condition "L1/H ≤ 0.38," L1 was small, thereby further reducing the airflow flowing into the decompression chamber, and thus the number of defects was three, which was less than that of Examples 1 to 5.

In Example 7, in which the seal gap was blocked by the seal material, the airflow flowing in through the gap to disrupt the pressure balance near the end of the sheet material was eliminated, and thus the number of defects was two, which was less than that of Examples 1 to 5.

In Example 8, in which the seal material was the elastic body, and the seal material was pressed against the casting device to block the seal gap, the minute gap with respect to the casting device was also able to be prevented, and thus the number of defects was one, which was less than that of Example 7.

In Example 9, in which the seal material was pressed against and fixed to the decompression chamber by the pressing member, the distortion and misalignment of the seal material were reduced, and thus the number of defects was zero, which was less than that of Example 8.

### Industrial Applicability

The present invention can be applied not only to apparatuses for producing and methods for producing a microporous polyolefin resin sheet but also to apparatuses for producing and methods for producing a solution resin sheet, die coating, and the like, but their scope of application is not limited to these examples. The scope the invention, however, is defined by the appended claims.

### Reference Signs List

- 1: DIE

- 2: CASTING DEVICE
- 3: SHEET MATERIAL
- 4: DECOMPRESSION CHAMBER
- 4a: SIDE WALL
- 5: DISCHARGE PORT
- 6: SHIELDING PLATE
- 7: DROPLET
- 8a, 8b: AIRFLOW
- 9: OPENING
- 10: SEAL MATERIAL
- 11: PRESSING MEMBER
- 12: EXHAUST NOZZLE
- 13: SPACE
- 14: SEAL GAP
- 15: BOLT

## Claims

1. A method for producing a microporous polyolefin resin sheet, the method comprising:
discharging a sheet material (3) containing a polyolefin resin and a diluent from a discharge port (5) of a die (1) toward a casting device (2);
covering a space between the sheet material and the casting device by a decompression chamber (4) disposed upstream of the discharge port (5) in a sheet conveying direction;
sucking air in the decompression chamber (4) to make a decompression space and bringing the sheet material into intimate contact with the casting device; and
cooling and solidifying the sheet material while conveying the sheet material by the casting device,
the suction of air in the decompression chamber (4) being performed from exhaust nozzles (12) disposed outside both ends of the sheet material in a width direction such that openings (9) of the exhaust nozzles face each other, the method being **characterized in that**
Y1/H ≤ 0.13 and 0.25 ≤ Y2/H ≤ 0.75 when a shortest distance from the discharge port (5) of the die (1) to an outer peripheral face of the casting device (2) is H, a shortest distance from an upper end of the opening (9) to an end of the sheet material is Y1, and a shortest distance from a lower end of the opening (9) to the end of the sheet material (3) is Y2.

2. The method for producing a microporous polyolefin resin sheet according to claim 1, wherein a suction width L1, which is a horizontal distance from an end of the sheet material (3) to an upstream end in the sheet conveying direction at the upper end of the opening (9) of the exhaust nozzle observed from outside in a sheet width direction is set to be L1/H ≤ 0.38.

3. The method for producing a microporous polyolefin resin sheet according to claim 1 or 2, wherein a seal gap (14), which is a gap positioned immediately below the opening of the exhaust nozzle in a gap between a side wall (4a) of the decompression chamber (4) and the casting device (2), is physically blocked by a seal material (10), the side wall (4a) being perpendicular to a sheet width direction.

4. The method for producing a microporous polyolefin resin sheet according to claim 3, wherein the seal material (10) is an elastic body, and the seal material is pressed against the casting device (2) to block the seal gap (14).

5. The method for producing a microporous polyolefin resin sheet according to claim 4, wherein the seal material is pressed against and fixed to the decompression chamber by a pressing member (11).

6. An apparatus for producing a microporous polyolefin resin sheet, the apparatus comprising:
a die (1) including a discharge port (5) configured to discharge a sheet material (3) containing a polyolefin resin and a diluent;
a casting device (2) configured to cool and solidify the sheet material (3) discharged from the discharge port (5) while conveying the sheet material; and
a decompression chamber (4) disposed upstream of the discharge port (5) in a sheet conveying direction, the decompression chamber (4) being configured to cover a space between the sheet material (3) and the casting device (2) and suck air to make a decompression space,
in the decompression chamber (4), exhaust nozzle: (12) configured to suck air in the decompression chamber being disposed outside both ends of the sheet material in a width direction such that openings of the exhaust nozzles face each other, the apparatus being **characterized in that**
the die (1), the casting device (2), and the exhaust nozzles (12) are disposed such that Y1/H ≤ 0.13 and 0.25 ≤ Y2/H ≤ 0.75 when a shortest distance from the discharge port (5) of the die (1) to an outer peripheral face of the casting device (2) is H, a shortest distance from an upper end of the opening (9) of the exhaust nozzle (12) to an end of the sheet material is Y1, and a shortest distance from a lower end of the opening (9) of the exhaust nozzle (12) to the end of the sheet material (3) is Y2.

7. The apparatus for producing a microporous polyolefin resin sheet according to claim 6, wherein the exhaust nozzle (12) is disposed such that a suction width L1, which is a horizontal distance from an end of the sheet material (3) to an upstream end in the sheet conveying direction at the upper end of the opening (9) of the exhaust nozzle (12) observed from outside in a sheet width direction, gives L1/H ≤ 0.38.

8. The apparatus for producing a microporous polyolefin resin sheet according to claim 6 or 7, further comprising a seal material (10) configured to physically block a seal gap (14) which is a gap positioned immediately below the opening (9) of the exhaust nozzle (12) in a gap between a side wall (4a) of the decompression chamber (4) and the casting device (2), the side wall being perpendicular to a sheet width direction.

9. The apparatus for producing a microporous polyolefin resin sheet according to claim 8, wherein the seal material (10) is an elastic body, and the seal material is pressed against the casting device.

10. The apparatus for producing a microporous polyolefin resin sheet according to claim 9, further comprising a pressing member (11) configured to press the seal material (10) against and fix the seal material to the decompression chamber (4).

11. The apparatus for producing a microporous polyolefin resin sheet according to any one of claims 8 to 10, wherein the side wall (4a) is configured to be movable in a width direction of the sheet material (3).

## Patentansprüche

1. Verfahren zur Herstellung einer mikroporösen Polyolefinharzfolie, wobei das Verfahren umfasst:
Abgeben eines Folienmaterials (3), das ein Polyolefinharz und ein Verdünnungsmittel enthält, aus einer Abgabeöffnung (5) einer Form (1) in Richtung einer Gießvorrichtung (2);
Abdecken eines Raums zwischen dem Folienmaterial und der Gießvorrichtung durch eine Dekompressionskammer (4), die stromaufwärts der Abgabeöffnung (5) in einer Folienförderrichtung angeordnet ist;
Ansaugen von Luft in die Dekompressionskammer (4), um einen Dekompressionsraum zu schaffen und das Folienmaterial in engen Kontakt mit der Gießvorrichtung zu bringen; und
Kühlen und Verfestigen des Folienmaterials, während das Folienmaterial durch die Gießvorrichtung gefördert wird,
wobei das Ansaugen von Luft in der Dekompressionskammer (4) von Auslassdüsen (12) durchgeführt wird, die außerhalb beider Enden des Folienmaterials (9) in einer Breitenrichtung angeordnet sind, so dass Öffnungen der Auslassdüsen einander zugewandt sind,
wobei das Verfahren **dadurch gekennzeichnet ist, dass**
Y1/H ≤ 0,13 und 0,25 ≤ Y2/H ≤ 0,75, wenn ein kürzester Abstand von der Abgabeöffnung (5) der Form (1) zu einer Außenumfangsfläche der Gießvorrichtung (2) H ist, ein kürzester Abstand von einem oberen Ende der Öffnung (9) zu einem Ende des Folienmaterials Y1 ist und ein kürzester Abstand von einem unteren Ende der Öffnung (9) zu dem Ende des Folienmaterials (3) Y2 ist.

2. Verfahren zur Herstellung einer mikroporösen Polyolefinharzfolie nach Anspruch 1, wobei eine Ansaugbreite L1, die ein horizontaler Abstand von einem Ende des Folienmaterials (3) zu einem stromaufwärtigen Ende in der Folienförderrichtung an dem oberen Ende der Öffnung (9) der Auslassdüse ist, von außen in einer Folienbreitenrichtung betrachtet, auf L1/H ≤ 0,38 eingestellt ist.

3. Verfahren zur Herstellung einer mikroporösen Polyolefinharzfolie nach Anspruch 1 oder 2, wobei ein Dichtungsspalt (14), der ein Spalt ist, der unmittelbar unter der Öffnung der Auslassdüse in einem Spalt zwischen einer Seitenwand (4a) der Dekompressionskammer (4) und der Gießvorrichtung (2) positioniert ist, physikalisch durch ein Dichtungsmaterial (10) blockiert wird, wobei die Seitenwand (4a) senkrecht zu einer Folienbreitenrichtung ist.

4. Verfahren zur Herstellung einer mikroporösen Polyolefinharzfolie nach Anspruch 3, wobei das Dichtungsmaterial (10) ein elastischer Körper ist und das Dichtungsmaterial gegen die Gießvorrichtung (2) gedrückt wird, um den Dichtungsspalt (14) zu blockieren.

5. Verfahren zur Herstellung einer mikroporösen Polyolefinharzfolie nach Anspruch 4, wobei das Dichtungsmaterial durch ein Druckelement (11) gegen die Dekompressionskammer gedrückt und an dieser befestigt wird.

6. Vorrichtung zur Herstellung einer mikroporösen Polyolefinharzfolie, wobei die Vorrichtung umfasst:
eine Form (1) mit einer Abgabeöffnung (5), die konfiguriert ist, um ein Folienmaterial (3) abzugeben, das ein Polyolefinharz und ein Verdünnungsmittel enthält;
eine Gießvorrichtung (2), die konfiguriert ist, um das aus der Abgabeöffnung (5) abgegebene Folienmaterial (3) zu kühlen und zu verfestigen, während das Folienmaterial gefördert wird; und
eine Dekompressionskammer (4), die stromaufwärts der Abgabeöffnung (5) in einer Folienförderrichtung angeordnet ist, wobei die Dekompressionskammer (4) konfiguriert ist, um einen Raum zwischen dem Folienmaterial (3) und der Gießvorrichtung (2) abzudecken und Luft anzusaugen, um einen Dekompressionsraum zu schaffen,
wobei in der Dekompressionskammer (4) Auslassdüsen (12), die konfiguriert sind, um Luft in die Dekompressionskammer anzusaugen, außerhalb beider Enden des Folienmaterials in einer Breitenrichtung angeordnet sind, so dass Öffnungen der Auslassdüsen einander zugewandt sind, wobei die Vorrichtung **dadurch gekennzeichnet ist, dass**
die Form (1), die Gießvorrichtung (2) und die Auslassdüsen (12) so angeordnet sind, dass Y1/H ≤ 0,13 und 0,25 ≤ Y2/H ≤ 0,75, wenn ein kürzester Abstand von der Abgabeöffnung (5) der Form (1) zu einer Außenumfangsfläche der Gießvorrichtung (2) H ist, ein kürzester Abstand von einem oberen Ende der Öffnung (9) der Auslassdüse (12) zu einem Ende des Folienmaterials (3) Y1 ist und ein kürzester Abstand von einem unteren Ende der Öffnung (9) der Auslassdüse (12) zu dem Ende des Folienmaterials (2) Y2 ist.

7. Vorrichtung zur Herstellung einer mikroporösen Polyolefinharzfolie nach Anspruch 6, wobei die Auslassdüse (12) so angeordnet ist, dass eine Ansaugbreite L1, die ein horizontaler Abstand von einem Ende des Folienmaterials (3) zu einem stromaufwärtigen Ende in der Folienförderrichtung an dem oberen Ende der Öffnung (9) der Auslassdüse (12) ist, von außen in einer Folienbreitenrichtung betrachtet, L1/H ≤ 0,38 ergibt.

8. Vorrichtung zur Herstellung einer mikroporösen Polyolefinharzfolie nach Anspruch 6 oder 7, ferner umfassend ein Dichtungsmaterial (10), das konfiguriert ist, um einen Dichtungsspalt (14) physikalisch zu blockieren, der ein Spalt ist, der unmittelbar unter der Öffnung (9) der Auslassdüse (12) in einem Spalt zwischen einer Seitenwand (4a) der Dekompressionskammer (4) und der Gießvorrichtung (2) positioniert ist, wobei die Seitenwand senkrecht zu einer Folienbreitenrichtung ist.

9. Vorrichtung zur Herstellung einer mikroporösen Polyolefinharzfolie nach Anspruch 8, wobei das Dichtungsmaterial (10) ein elastischer Körper ist und das Dichtungsmaterial gegen die Gießvorrichtung gedrückt wird.

10. Vorrichtung zur Herstellung einer mikroporösen Polyolefinharzfolie nach Anspruch 9, ferner umfassend ein Druckelement (11), das konfiguriert ist, um das Dichtungsmaterial gegen die Dekompressionskammer (4) zu drücken und das Dichtungsmaterial (10) an dieser zu befestigen.

11. Vorrichtung zur Herstellung einer mikroporösen Polyolefinharzfolie nach einem der Ansprüche 8 bis 10, wobei die Seitenwand (4a) konfiguriert ist, um in einer Breitenrichtung des Folienmaterials (3) beweglich zu sein.

## Revendications

1. Procédé de production d'une feuille de résine de polyoléfine microporeuse, le procédé comprenant :
l'évacuation d'un matériau en feuille (3) contenant une résine de polyoléfine et un diluant à partir d'un orifice d'évacuation (5) d'une filière (1) vers un dispositif de coulée (2) ;
le recouvrement d'un espace entre le matériau en feuille et le dispositif de coulée par une chambre de décompression (4) disposée en amont de l'orifice d'évacuation (5) dans une direction de transport de feuille ;
l'aspiration d'air dans la chambre de décompression (4) pour créer un espace de décompression et amener le matériau en feuille en contact intime avec le dispositif de coulée ; et
le refroidissement et la solidification du matériau en feuille tout en transportant le matériau en feuille par le dispositif de coulée,
l'aspiration d'air dans la chambre de décompression (4) étant effectuée à partir de buses d'échappement (12) disposées à l'extérieur des deux extrémités du matériau en feuille (9) dans une direction de largeur de sorte que des ouvertures des buses d'échappement se font face,
le procédé étant **caractérisé en ce que**
Y1/H ≤ 0,13 et 0,25 ≤ Y2/H ≤ 0,75 lorsqu'une distance la plus courte à partir de l'orifice d'évacuation (5) de la filière (1) jusqu'à une face périphérique externe du dispositif de coulée (2) est H, une distance la plus courte à partir d'une extrémité supérieure de l'ouverture (9) jusqu'à une extrémité du matériau en feuille est Y1, et une distance la plus courte à partir d'une extrémité inférieure de l'ouverture (9) jusqu'à l'extrémité du matériau en feuille (3) est Y2.

2. Procédé de production d'une feuille de résine de polyoléfine microporeuse selon la revendication 1, dans lequel une largeur d'aspiration L1, qui est une distance horizontale à partir d'une extrémité du matériau en feuille (3) jusqu'à une extrémité amont dans la direction de transport de feuille au niveau de l'extrémité supérieure de l'ouverture (9) de la buse d'échappement observée à partir de l'extérieur dans une direction de largeur de feuille est fixée pour être L1/H ≤ 0,38.

3. Procédé de production d'une feuille de résine de polyoléfine microporeuse selon la revendication 1 ou 2, dans lequel un espace d'étanchéité (14), qui est un espace positionné immédiatement en dessous de l'ouverture de la buse d'échappement dans un espace entre une paroi latérale (4a) de la chambre de décompression (4) et le dispositif de coulée (2), est physiquement bloqué par un matériau d'étanchéité (10), la paroi latérale (4a) étant perpendiculaire à une direction de largeur de feuille.

4. Procédé de production d'une feuille de résine de polyoléfine microporeuse selon la revendication 3, dans lequel le matériau d'étanchéité (10) est un corps élastique, et le matériau d'étanchéité est pressé contre le dispositif de coulée (2) pour bloquer l'espace d'étanchéité (14).

5. Procédé de production d'une feuille de résine de polyoléfine microporeuse selon la revendication 4, dans lequel le matériau d'étanchéité est pressé contre et fixé à la chambre de décompression par un élément de pression (11).

6. Appareil de production d'une feuille de résine de polyoléfine microporeuse, l'appareil comprenant :
une filière (1) comprenant un orifice d'évacuation (5) configuré pour évacuer un matériau en feuille (3) contenant une résine de polyoléfine et un diluant ;
un dispositif de coulée (2) configuré pour refroidir et solidifier le matériau en feuille (3) évacué à partir de l'orifice d'évacuation (5) tout en transportant le matériau en feuille ; et
une chambre de décompression (4) disposée en amont de l'orifice d'évacuation (5) dans une direction de transport de feuille, la chambre de décompression (4) étant configurée pour recouvrir un espace entre le matériau en feuille (3) et le dispositif de coulée (2), et aspirer de l'air pour créer un espace de décompression,
dans la chambre de décompression (4), des buses d'échappement (12) configurées pour aspirer de l'air dans la chambre de décompression étant disposées à l'extérieur des deux extrémités du matériau en feuille dans une direction de largeur de sorte que des ouvertures des buses d'échappement se font face, l'appareil étant **caractérisé en ce que**
la filière (1), le dispositif de coulée (2), et les buses d'échappement (12) sont disposés de sorte que Y1/H ≤ 0,13 et 0,25 ≤ Y2/H ≤ 0,75 lorsqu'une distance la plus courte à partir de l'orifice d'évacuation (5) de la filière (1) jusqu'à une face périphérique externe du dispositif de coulée (2) est H, une distance la plus courte à partir d'une extrémité supérieure de l'ouverture (9) de la buse d'échappement (12) jusqu'à une extrémité du matériau en feuille (3) est Y1, et une distance la plus courte à partir d'une extrémité inférieure de l'ouverture (9) de la buse d'échappement (12) jusqu'à l'extrémité du matériau en feuille (2) est Y2.

7. Appareil de production d'une feuille de résine de polyoléfine microporeuse selon la revendication 6, dans lequel la buse d'échappement (12) est disposée de sorte qu'une largeur d'aspiration L1, qui est une distance horizontale à partir d'une extrémité du matériau en feuille (3) jusqu'à une extrémité amont dans la direction de transport de feuille au niveau de l'extrémité supérieure de l'ouverture (9) de la buse d'échappement (12) observée à partir de l'extérieur dans une direction de largeur de feuille, donne L1/H ≤ 0,38.

8. Appareil de production d'une feuille de résine de polyoléfine microporeuse selon la revendication 6 ou 7, comprenant en outre un matériau d'étanchéité (10) configuré pour bloquer physiquement un espace d'étanchéité (14), qui est un espace positionné immédiatement en dessous de l'ouverture (9) de la buse d'échappement (12) dans un espace entre une paroi latérale (4a) de la chambre de décompression (4) et le dispositif de coulée (2), la paroi latérale étant perpendiculaire à une direction de largeur de feuille.

9. Appareil de production d'une feuille de résine de polyoléfine microporeuse selon la revendication 8, dans lequel le matériau d'étanchéité (10) est un corps élastique, et le matériau d'étanchéité est pressé contre le dispositif de coulée.

10. Appareil de production d'une feuille de résine de polyoléfine microporeuse selon la revendication 9, comprenant en outre un élément de pression (11) configuré pour presser le matériau d'étanchéité contre et fixer le matériau d'étanchéité (10) à la chambre de décompression (4).

11. Appareil de production d'une feuille de résine de polyoléfine microporeuse selon l'une quelconque des revendications 8 à 10, dans lequel la paroi latérale (4a) est configurée pour être mobile dans une direction de largeur du matériau en feuille (3).
